# EUROPEAN PATENT SPECIFICATION

(11) **EP 3 650 181 B1**
(45) Date of publication and mention of the grant of the patent: **15.06.2022**
(21) Application number: 18828986.2
(22) Date of filing: 05.07.2018
(51) Int. Cl.: B25J 9/16, B25J 13/08

(54) **ROUTE OUTPUT METHOD, ROUTE OUTPUT SYSTEM AND ROUTE OUTPUT PROGRAM**
ROUTENAUSGABEVERFAHREN, ROUTENAUSGABESYSTEM UND ROUTENAUSGABEPROGRAMM
PROCÉDÉ DE GÉNÉRATION D'ITINÉRAIRE, SYSTÈME DE GÉNÉRATION D'ITINÉRAIRE ET PROGRAMME DE GÉNÉRATION D'ITINÉRAIRE

(30) Priority: 05.07.2017 JP 2017131950
(43) Date of publication of application: 13.05.2020
(73) Proprietor: Omron Corporation, Kyoto-shi, Kyoto 600-8530 (JP)
(72) Inventor: HAYASHI, Kennosuke, Kyoto-shi Kyoto 600-8530 (JP); NAKASHIMA, Akane, Kyoto-shi Kyoto 600-8530 (JP); KOJIMA, Takeshi, Kyoto-shi Kyoto 600-8530 (JP); FUJII, Haruka, Kyoto-shi Kyoto 600-8530 (JP)
(74) Representative: Horn Kleimann Waitzhofer Patentanwälte PartG mbB
(86) International application number: PCT/JP2018/025472
(87) International publication number: WO 2019/009350

(56) References cited:
- WO-A1-2016/104666
- JP-A- H11 305 820
- JP-A- 2006 155 559
- JP-A- 2006 155 559
- US-A1- 2016 375 585
- US-B2- 8 055 383

## Description

### Technical Field

The present invention relates to a route outputting method and route outputting system.

### Background Art

Many robots are used in today's industry. A robot needs to learn operations by programming or teaching before actually performing any work. For example, Patent Document 1 discloses a method for removing objects stacked in bulk from a container using a robotic arm with an attached robotic hand. In the method described in Patent Document 1, an operator specifies in advance multiple teaching points that define the postures that can be assumed by the robotic arm at points along the operating route along which an industrial robot removes objects to prepare a reference operating program indicating a sequence consisting of several teaching points. Here, significant effort is required to determine multiple teaching points along the operating route of the robot in advance and to allow the robot to learn the operations. Therefore, a motion planning technique has been developed in which a robot is provided with a movement start position and target position and in which the route from the movement start point to the target position is automatically generated. For example, a technique has been disclosed in Patent Document 2 in which the search for a movement route involves the use of a combination of a rapidly-exploring random tree (RRT) algorithm and a roadmap method.

US 8 055 383 B2 discloses a path generating device with a constraint mid-configuration generator. The constraint mid-configuration generator defines a constraint surface in a joint angle space. The path generating device probabilistically generates a mid-configuration in the joint angle space. The constraint mid-configuration generator projects the probabilistically generated mid-configuration onto the constraint surface to generate a projected mid-configuration. Projected mid-configurations generated in this manner are joined to generate a path that does not interfere with obstacles (environmental object) in a work space.

### Prior Art Documents

### Patent Documents

Patent Document 1: JP 2013-126706 A
Patent Document 2: JP 2014-73550 A
Patent Document 3: JP 2006-155559 A

### Summary of Invention

### Technical Problem

When a sequence of teaching points indicating an operating route for a robot has been indicated and the robot is operated by an operating program generated based on the indicated sequence of teaching points, an operator has to take into consideration the posture of the robotic arm each time a teaching point is specified. In this way, the posture of the object held by the robot can be determined based on the posture of the robotic arm at the teaching points considered by the operator. However, in motion planning for automatically generating an operating route from a movement start position (start point) to a target position (end point), the posture of the object grasped by the robot may assume any orientation while the robot is moving from the movement start potion (initial posture) to the target position (target posture). Therefore, when a route automatically generated by motion planning is used, adverse effects may occur such as liquid spilling from a liquid-filled container while it is being moved, and the automatically generated route cannot actually be used as is. In this regard, neither Patent Document 1 nor Patent Document 2 take into consideration the posture of an object when automatically generating an operating route for a robot.

Patent Document 3 mentions a method for automatically generating an operating route for a robot while taking the posture of the robot into consideration. In this method, intermediate points are stochastically generated between a movement start position and a target position when an operating route is generated to move a robot from the movement start position to the target position. In this method, constraints restricting the postures that the robot can assume in the real space inhabited by the robot are set in configuration space defined by the degree of freedom provided to the robot, constrained intermediate points are generated based on these constraints, and a route is generated from the movement start position to the target position using these constrained intermediate points.

Because it is difficult to generate intermediate points that satisfy these constraints stochastically, the method described in Patent Document 3 sets a constrained subspace that satisfies the constraints in configuration space and generates constrained intermediate points by projecting stochastically generated intermediate points into the constrained subspace. However, even when such a projection calculation is used, it is still difficult to generate intermediate points that satisfy these constraints stochastically. Therefore, projection calculations are performed at a high degree of frequency and this cannot be said to be an efficient calculation method. Also, when intermediate points q1 and q2 generated stochastically in configuration space are mapped to constrained subspaces v1 and v2, the logical product of v1 and v2 may be an empty set. This phenomenon is more likely to occur in a robot that does not have redundant shafts. Because a route connecting intermediate points q1 and q2 does satisfy the constraints in this situation, the intermediate points have to be regenerated and corrected and this cannot be said to be an efficient calculation method.

Also, in the method described in Patent Document 3, the route calculations are simplified by setting a constrained ellipsoid that satisfies constraints at or near any position in configuration space defined by the degree of freedom provided to the robot. This calculation method can solve the problem associated with projection calculations but a constrained ellipsoid can only provide restrictions related the posture of the robot. If the logical product of space formed by points on the constrained ellipsoid and obstacle space in the configuration space is not an empty set, intermediate points generated based on the constrained ellipsoid may experience interference by obstacles. When a robot is surrounded by obstacles, this interference is highly probable. Therefore, the intermediate points have to be regenerated and corrected and this cannot be said to be an efficient calculation method.

In general, it requires a large number of calculations to express obstacle space as constrained space inside configuration space for an articulated robot, and it is difficult to perform route calculations efficiently by defining both a constrained ellipsoid and obstacle space inside configuration space.

Therefore, an object of the present invention is to provide a route outputting method, route outputting system, and route outputting program that are able to maintain the posture of an object while a robot is transporting the object.

### Solution to Problem

The invention is defined in claims 1-6.

### Advantageous Effects of Invention

The present invention is able to provide a route outputting method and a route outputting system, that are able to maintain the posture of an object while a robot is transporting the object.

### Brief Description of Drawings

FIG. 1 is a diagram showing an example of a configuration for the robot system 1 in the first embodiment.
FIG. 2 is a block diagram showing an example of a hardware configuration for the arithmetic device 10.
FIG. 3 is an example of a flowchart for the route outputting procedure performed by the arithmetic device 10.
FIG. 4 is an example of a flowchart for a route generating procedure based on RRT.
FIG. 5 is a diagram showing an example of configuration space in a route generating procedure based on RRT.
FIG. 6 is an example of a flowchart for a route generating procedure based on PRM.
FIG. 7 is a diagram showing an example of configuration space in a route generating procedure based on PRM.
FIG. 8 is an example of a flowchart for a route generating procedure based on the potential method.
FIG. 9 is a diagram showing an example of configuration space in a route generating procedure based on the potential method.
FIG. 10 is an example of a flowchart for a route generating procedure based on trajectory optimization.
FIG. 11 is a diagram showing an example of configuration space in a route generating procedure based on trajectory optimization.
FIG. 12 is a diagram used to explain a route generating procedure in configuration space based on transport conditions.
FIG. 13 is a diagram used to explain a route generating procedure in real space based on transport conditions.
FIG. 14 is a flowchart of a route generating procedure with intermediate points.
FIG. 15 is a diagram used to explain bias processing using the potential method.
FIG. 16 is a diagram used to explain bias processing using space division.

### Description of Embodiments

Preferred embodiments of the present invention will be explained with reference to the appended drawings. In each drawing, identical or similar configurations are denoted by the same reference signs. The following embodiments are mere examples used to explain the present invention and are not intended to limit the present invention.

### 1st Embodiment

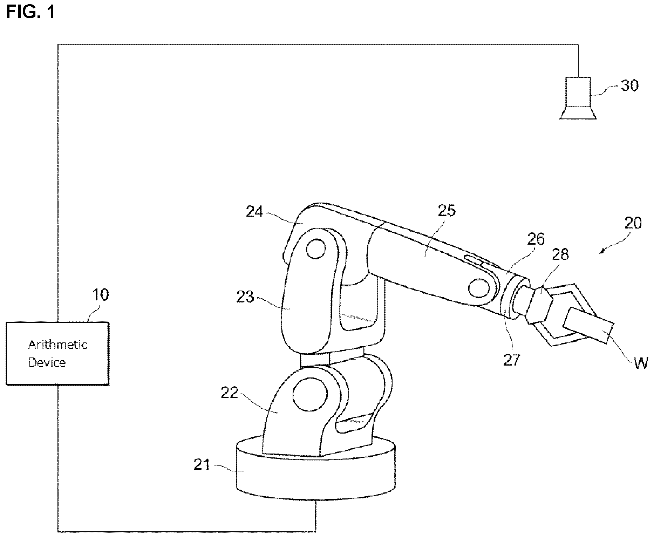

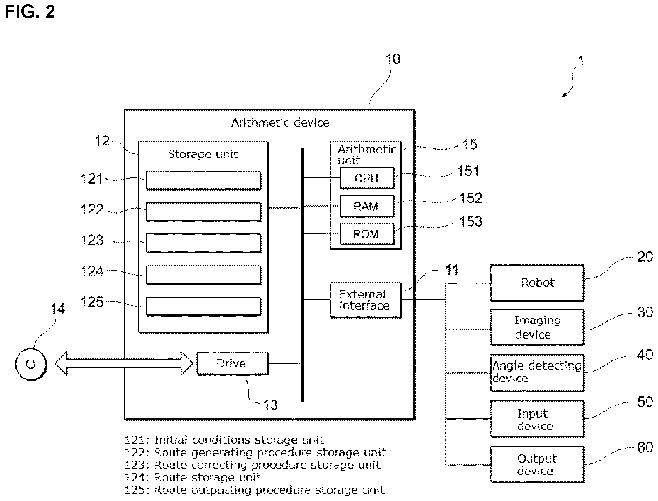

First, the robot system in a first embodiment of the present invention will be explained with reference to FIG. 1 and FIG. 2. FIG. 1 is a diagram showing an example of a configuration for the robot system 1 in the present embodiment. As shown in FIG. 1, the robot system 1 includes an arithmetic device 10 and a robot 20. As shown in FIG. 1 and FIG. 2, the robot system 1 also includes an imaging device 30, an angle detecting device 40, an input device 50, and an output device 60.

The arithmetic device 10 is used to calculate a route for the robot 20 to move from an initial posture to a target posture based on an initial posture and a target posture. In the present embodiment, the calculated route is outputted to the robot 20. In this example, the arithmetic device 10 is separate from the robot 20. However, the present invention is not limited to this example. The arithmetic device 10 and the robot 20 may be integrated. The route that results from the calculation does not have to be outputted to an actual robot 20. For example, it may be outputted to a simulator. In one example, a virtual model of a robot 20 and the route resulting from a calculation may be outputted to the output device 60 described below, and the operation of the robot 20 may be reproduced by the output device 60.

The arithmetic device 10 may comprise at least an arithmetic unit for executing the calculations related to the generation and output of a route as described below, a volatile and/or non-volatile storage device (including a storage unit and memory, etc.) for storing information used in the execution of the calculations (including a program and conditions, etc.), and an interface for obtaining this information and outputting the results of calculations. In other words, the arithmetic device 10 may be a dedicated or general-purpose information processor for executing the calculations described above. Because the robot system 1 includes a configuration corresponding to the arithmetic device 10, it may be a dedicated or general-purpose information processing system with a configuration for executing the calculations described above.

The robot 20 may be, for example, a six-shaft vertically articulated robot. In the example shown in FIG. 1, the robot 20 includes a base 21, a first link 22, a second link 23, a third link 24, a fourth link 25, a fifth link 26, a sixth link 27, and an end effector 28. The robot 20 also includes a movable shaft (drive motor) for rotating each link. In this way, the robot 20 is configured so that the base 21 and the links are connected to each other via the drive motor.

The base 21 is attached to a structure on which the robot 20 is installed. The base 21 is connected to the first link 22 via a movable shaft perpendicular to the upper surface. The first link 22 can rotate around the movable shaft relative to the base 21.

The first link 22 has two plate-like members connected to each other on the base 21 side. The two plate-like members in the first link 22 are connected to each other. The two plate-like members in the first link 22 extend in the direction opposite the base 21 and face each other. In the first link 22, one end of the second link 23 is interposed between the two plate-like members. The first link 22 is connected to the second link 23 by a movable shaft perpendicular to the surfaces of the two plate-like members facing each other. The second link 23 can rotate around the movable shaft relative to the first link 22.

The second link 23 has two plate-like members connected to each other on the first link 22 side. The two plate-like members in the second link 23 are connected to each other. In the second link 23, the third link 24 is interposed between the two plate-like members. The second link 23 is connected to the third link 24 by a movable shaft perpendicular to the surfaces of the two plate-like members facing each other. The third link 24 can rotate around the movable shaft relative to the second link 23.

The third link 24 is connected to the fourth link 25 via a movable shaft located on a plane parallel to the surfaces of the two plate-like members of the second link 23 facing each other. The fourth link 25 can rotate around the movable shaft relative to the third link 24.

The fourth link 25 has two plate-like members connected to each other on the third link 24 side. The two plate-like members in the fourth link 25 are connected to each other. In the fourth link 25, the fifth link 26 is interposed between the two plate-like members. The fourth link 25 is connected to the fifth link 26 by a movable shaft perpendicular to the surfaces of the two plate-like members facing each other. The fifth link 26 can rotate around the movable shaft relative to the fourth link 25.

The fifth link 26 is connected to the sixth link 27 via a movable shaft perpendicular to the surfaces of the two plate-like members of the fourth link 25 facing each other. The sixth link 27 is connected to the fifth link 26 via a movable shaft. In the present embodiment, the fifth link 26 and the sixth link 27 have a cylindrical shape. The fifth link 26 and the sixth link 27 share a central shaft, and the sixth link 27 rotates around the movable shaft relative to the fifth link 26. The sixth link 27 has a connecting structure for attaching the end effector 28 directly or indirectly via a connecting member (attachment) to the end opposite the one connected to the fifth link 26, and is connected to the end effector 28 via this connecting structure.

In the example shown in FIG. 1, the end effector 28 is a mechanism for grasping an object W. There are no particular restrictions on the mechanism as long as it can grasp an object W. The end effector 28 may also be a mechanism that suctions an object W instead of grasping an object W. The end effector 28 is connected to the fifth link 26 via a movable shaft located on a plane parallel to the surfaces of the two plate-like members of the fourth link 25 facing each other. The end effector 28 can rotate around the movable shaft relative to the fifth link 26. Note that the end effector 28 is not limited to a mechanism for grasping an object. For example, the end effector 28 may be a suction pad for suctioning and holding an object W. The end effector 28 may also use a flat plate member having a level surface on which the object W is placed.

The end effector 28 may also grasp an object W in a suspended state. In this way, the robot 20 can maintain the orientation of the object W while the object W is being transported from an initial position to a target position.

The end effector 28 may have a mechanism for grasping an object W so that the transport conditions stored in the initial conditions storage unit 121 included in the storage unit 12 described below are satisfied. The end effector 28 may also have a mechanism for grasping an object W so that transport conditions stored in the initial conditions storage unit 121 that have been changed by the user or the arithmetic device 10 are satisfied.

Here, transport conditions are the conditions when a robot 20 transports an object W from the first position to the second position, and include first conditions related to the posture of the object W. In the present embodiment, the arithmetic device 10 generates and corrects routes for a robot 20 based on transport conditions. Note that the transport conditions may also include second conditions related to the environment in which the robot 20 is situated. The second conditions can be conditions related to areas with objects surrounding the robot 20 (obstacles) and conditions related to areas in which the robot 20 is prohibited from entering. The conditions related to the posture of the object W preferably are conditions for maintaining the posture of the object W below a specific range of angles. This keeps an object W from being turned upside down while being transported from a first position to a second position. The transport conditions are not limited to first conditions and second conditions. For example, they may include conditions related to the speed of the robot 20 when transporting an object W from a first position to a second position. The first position and the second position may be a specific position at which the object W is first held and a specific position at which the object is no longer being held after being transported, but there are no particular restrictions. For example, they may be any position from the position at which an object W is first held to the position at which the object W is no longer being held.

As shown in the example, the base 21, the first link 22, the second link 23, the third link 24, the fourth link 25, the fifth link 26, the sixth link 27, and the end effector 28 are connected in series via movable shafts to form a six-shaft vertically articulated robot. However, the robot 20 is not limited to a six-shaft vertically articulated robot and may have two or more movable shafts. For example, the robot 20 may be a five-shaft vertically articulated robot or a seven-shaft vertically articulated robot. As mentioned above, the robot 20 does not have to be an actual robot made of hardware but can also be a virtual robot in a simulator.

The imaging device 30 is used to capture images of an object W being held by the end effector 28. The imaging device 30 can be, for example, a camera. The imaging device 30 sends images of an object W being held by the end effector 28 to the arithmetic device 10, and the arithmetic device 10 calculates the initial position and the target position of the object W. Alternatively, the imaging device 30 may calculate the initial position and the target position of the object W by processing images of the object W being held by the end effector 28 using its own process and then send the positions to the arithmetic device 10. The initial position is the position of the object W at the start point when transported by the robot 20. The target position is the position of the object W at the end point when transported by the robot 20.

The initial position and the target position may each include information related to the posture of the object W. The initial position and the target position may also each include information on the position and/or posture of the end effector 28 holding the object W.

Note that the robot system 1 may include an angle detecting device 40 instead of an imaging device 30 or in addition to an imaging device 30. An angle detecting device 40 detects the angle of the object W being held by the end effector 28. The angle detecting device 40 may be a speed sensor or a gyro sensor. These may be mounted, for example, on the end effector 28. The end effector 28 grips the object W firmly. As a result, the angle of the object W can be detected by detecting the angle of the end effector 28. The angle detecting device 40 sends the measured angle of the object W to the arithmetic device 10. There are no particular restrictions on the reference for the angle of the object W detected by the angle detecting device 40. For example, the angle detecting device 40 detects the angle of the object W based on the angle of the end effector 28 relative to the vertical direction when the vertical direction is used as the reference.

The angle detecting device 40 may be attached to the object W. Also, an angle detecting device 40 may be attached to at least one of the first link 22, the second link 23, the third link 24, the fourth link 25, the fifth link 26, the sixth link 27, and the end effector 28. Specifically, an angle detecting device 40 may be attached to each of the fourth link 25, the fifth link 26, and the end effector 28. In this case, the angle detecting devices 40 can measure, for example, the rotation angle of the fourth link 25 relative to the third link 24, the rotation angle of the fifth link 26 relative to the fourth link 25, and the rotation angle of the end effector 28 relative to the fifth link 26. The angle of the object W being held by the end effector 28 is detected by performing arithmetic processing (such as calculations using forward kinematics).

FIG. 2 is a block diagram showing an example of a hardware configuration for the arithmetic device 10 in the present embodiment. The arithmetic device 10 calculates the route of the robot 20 and includes in the present embodiment, as shown in the drawing, an external interface 11, a storage unit 12, and an arithmetic unit 15. The arithmetic device 10 may include a drive 13.

The external interface 11 is used to connect an external device to the arithmetic device 10. In the example shown in FIG. 2, the external interface 11 is used to establish a connection between the arithmetic device 10 and the robot 20, the imaging device 30, the angle detecting device 40, the input device 50, and the output device 60 for the exchange of information. The external interface 11 also serves as an acquisition unit for acquiring the initial position and target position of the object W. The external interface 11 acquires, for example, the initial position and the target position for an object W inputted by the user using the input device 50. Alternatively, the external interface 11 acquires images of the object W being held by the end effector 28 from the imaging device 30. Here, the arithmetic unit 15 calculates the initial position and the target position of the object W from acquired images based on an image processing program stored in the storage unit 12. Alternatively, the external interface 11 acquires an initial position and a target position calculated by the imaging device 30.

In addition to the initial position or along with the initial position, the external interface 11 may acquire the posture of the robot 20 when an object W in the initial position is being grasped. In the following explanation, this posture is referred to as the initial posture. Also, in addition to the target position or along with the target position, the external interface 11 may acquire the posture of the robot 20 when the object W has been placed at the target position. In the following explanation, this posture is referred to as the target posture. The external interface 11 may also acquire the angle of the object W measured by the angle detecting device 40 and store it in the storage unit 12. The external interface 11 may also be configured to acquire the present posture (current posture) of the robot 20. The posture of the robot 20 acquired by the external interface 11 may be an encoder value provided in accordance with the plurality of movable shafts of the robot 20 to detect information related to the rotation angles of the movable shafts of the robot 20.

Generally, the posture of the robot can be expressed as a point in configuration space. Configuration space is vector space used when a route is planned. Points placed in configuration space are said to be sampled. In route planning, a route connecting the start to the goal is generated in configuration space provided with obstacle positions, a start, and a goal. The configuration space has the same number of dimensions as the number of movable shafts in the robot. A point in configuration space is defined by the same number of values as the number of movable shafts in the robot, and the value of each movable shaft represents the rotation angle around each movable shaft of the robot. Configuration space is sometimes known as joint space in the field of route planning for robots. Note that absolute coordinate space based on real space may be used as space for route planning.

When the robot 20 is a six-shaft vertically articulated robot, as in the present embodiment, the configuration space is six-dimensional vector space. The values for each movable shaft of the robot 20 in configuration space are expressed as the rotation angle of the first link 22 relative to the base 21, the rotation angle of the second link 23 relative to the first link 22, the rotation angle of the third link 24 relative to the second link 23, the rotation angle of the fourth link 25 relative to the third link 24, the rotation angle of the fifth link 26 relative to the fourth link 25, and the rotation angle of the sixth link 27 relative to the fifth link 26. In arithmetic processing for generating a route, the arithmetic unit 15 acquires data related to the rotation angle of each movable shaft (values detected by encoders provided in the robot 20) using the external interface, and calculates the position and posture of the robot 20 or a virtual model thereof based on forward kinematics. The arithmetic unit 15 may also calculate the values of the coordinates for the points determining the initial posture of the robot 20 and the values of the coordinates for the points determining the target posture of the robot 20 using configuration space. Note that the arithmetic unit 15 may acquire the values of the coordinates for the points determining the initial posture and/or target posture of the robot 20 using the acquisition unit function of the external interface 11.

The external interface 11 also functions as an output unit for outputting routes generated by the route generating procedure storage unit 122 and the route correcting procedure storage unit 123 described below to the robot 20 or to the output device 60.

The storage unit 12 may be composed of volatile memory, non-volatile memory, and/or a hard disc drive (HDD). In the present embodiment, the storage unit 12 comprises an initial conditions storage unit 121, a route generating procedure storage unit 122, a route correcting procedure storage unit 123, a route storage unit 124, and a route outputting procedure storage unit 125.

The initial conditions storage unit 121 stores initial values in the transport conditions and can be a predetermined storage area provided inside the storage unit 12. Here, the initial storage conditions may the second conditions described above, that is, conditions related to the environment surrounding the robot 20. Here, an initial value in the second conditions can be for an obstacle area Co. An obstacle area Co is an area in the configuration space with a point giving the posture of the robot 20 where at least one of the robot 20 and the object W would collide with a surrounding obstacle. In the following explanation, "the robot 20 colliding with an obstacle" also includes situations in which the object W grasped by the robot 20 would collide with an obstacle. Here, information related to the environment surrounding the robot 20 is referred to as "surrounding environment information", and an obstacle area Co is one example of surrounding environment information. The transport conditions may also include first conditions related to the posture of the object W when a robot is transporting the object W from a first position to a second position. For example, an initial value in the first conditions related to the posture of the object W may include a non-conforming angle area Cp. A non-conforming angle area Cp is an area in the configuration space with a point giving a posture of the robot 20 in which the posture of the object W does not meet predetermined conditions. Because an object W grasped by the end effector 28 is transported from an initial posture to a target posture, a non-conforming angle area Cp can be expressed as a predetermined area in configuration space. A non-conforming angle area Cp is determined based on conditions related to the posture of the object W, and these conditions may include, for example, whether the object W is not to be turned upside down during transport or whether the angle of the object W during transport is to be kept within a given range relative to the vertical direction. An obstacle area and a non-conforming angle area may overlap. These transport conditions can be established or changed by the user. For example, transport conditions may be inputted by the user using the input device 50. At this time, the arithmetic device 10 acquires the inputted conditions via the external interface 11. The acquired conditions are then stored in the storage unit 12 as initial values or overridden values in the initial conditions storage unit 121. Transport conditions may also be established or changed by the arithmetic device 10 based, for example, on information from sensors (not shown) acquired on the environment surrounding the robot 20, CAD data, or predetermined values. The arithmetic device 10 may, for example, perform arithmetic processing to update an obstacle area Co based on values acquired from sensors on the environment surrounding the robot 20 and update a non-conforming area Cp by increasing or decreasing the area based on the updated obstacle area Co.

The initial conditions storage unit 121 may also store conditions related to the robot 20 using a route. As mentioned above, the robot 20, a robot 20 is created by connecting a base and each of a plurality of links to each other via movable shafts. Therefore, the initial conditions storage unit 121 may include information related to the shape of the base and each link and information related to the movable shafts (for example, rotating angle, speed, and acceleration information) as conditions related to the robot 20. In this way, a route for the robot 20 can be calculated by the arithmetic device 10 or movement by the robot 20 can be reproduced in virtual space using the route. In order to readily reproduce movement by a robot 20, the initial conditions storage unit 121 may store an approximate model of the robot 20 as conditions related to the robot 20. The initial conditions storage unit 121 may also store the initial position and target position of the end effector 28 and/or object W. Conditions stored in the initial conditions storage unit 121 may be expressed in any form. For example, they may be expressed as predetermined functions used to determine whether conditions have been met.

The route generating procedure storage unit 122 can be a predetermined storage area provided inside the storage unit 12. The route generating procedure storage unit 122 stores a program used by the arithmetic unit 15 to execute arithmetic processing to generate a route when a robot 20 is to transport an object W from an initial position to a target position. For example, arithmetic processing related to the generation of a route can be executed by retrieving and executing a software program stored in the route generating procedure storage unit 122 of the storage unit 12 in the arithmetic unit 15. The arithmetic unit 15 acquires transport conditions from outside of the arithmetic device 10 or calls transport conditions from the initial conditions storage unit 121 based on the program stored in the route generating procedure storage unit 122. The arithmetic unit 15 generates a route based on the acquired or called up conditions that satisfies the transport conditions along the entire route used by the robot 20 to transport an object W from the initial position to a target position. For example, when the transport conditions indicate that the angle of the object W is to be kept within a predetermined range during transport, the arithmetic unit 15 generates a route in which the angle of the object W is kept within the predetermined range while the robot 20 is transporting the object W from the initial position to the target position.

In the present embodiment, a program is stored in the route generating procedure storage unit 122 for generating a route that satisfies the conditions related to the posture of the object W during transport while preventing interference with obstacles present in the environment surrounding the robot 20. Note that a generated route can be expressed as a sequence T of points Ni in configuration space connecting a point S indicating the initial posture to a point G indicating the target posture. Any method can be used by the route generating procedure executed by the arithmetic unit 15. Examples include the potential method, the roadmap method, and the optimization method. The route generation procedure performed using each of these methods will be described below.

The route correcting procedure storage unit 123 can be a predetermined storage area provided inside the storage unit 12. The route correcting procedure storage unit 123 stores a program used by the arithmetic unit 15 to execute arithmetic processing to correct a route generated based on the program stored in the route generating procedure storage unit 122. In the present embodiment, a program is stored in the route correcting procedure storage unit 123 for correcting a route so that it satisfies the conditions related to the posture of the object W during transport while preventing interference with obstacles present in the environment surrounding the robot 20. The program stored in the route correcting procedure storage unit 123 may execute processing for smoothing a route generated by the route generating procedure storage unit 122. The program may also execute processing for finding shortcuts in the route generated by the program stored in the route generating procedure storage unit 122. The program may also execute processing for evaluating routes based on a predetermined function and selecting the optimum route when a plurality of routes is generated by arithmetic processing based on the program stored in the route generating procedure storage unit 122. Separate programs may also be stored for correcting a route to prevent interference with obstacles present in the environment surrounding the robot 20 and for correcting a route to satisfy conditions related to the posture of the object W during transport.

The route storage unit stores routes generated or corrected by executing the programs stored in the route generating procedure storage unit 122 and the route correcting procedure storage unit 123 (referred to below simply as "generated routes") and can be a predetermined storage area provided inside the storage unit 12. When there has been no change in the conditions used to generate or correct routes, the arithmetic processing based on the program stored in the route generating procedure storage unit 122 may be performed simply by retrieving a route stored in the route storage unit 124. For example, when there has been no change in the initial position and target position for an object W on a previously generated route, that is, when there has been no change in the surrounding environment information, the arithmetic unit 15 generates or corrects a route by retrieving a route stored in the route storage unit 124. In this way, the arithmetic unit 15 can quickly generate the appropriate route. Preferably, the route storage unit 124 stores routes generated by execution of the programs stored in the route generating procedure storage unit 122 and the route correcting procedure storage unit 123 along with the conditions taken into consideration when the route was generated or corrected.

The route outputting procedure storage unit 125 can be a predetermined storage area provided inside the storage unit 12. The route outputting procedure storage unit 125 stores a program for outputting to the robot 20 via the external interface a route generated by execution of the programs stored in the route generating procedure storage unit 122 and the route correcting procedure storage unit 123 or a route stored in the route storage unit 124. The route is outputted via the external interface 11 by retrieving and executing in the arithmetic unit 15 a software program stored in the route outputting procedure storage unit 125.

The route generating procedure storage unit 122, route correcting procedure storage unit 123, and route outputting procedure storage unit 125 do not have to be separate units. For example, the processing executed by the route generating procedure storage unit 122, the processing executed by the route correcting procedure storage unit 123, and the processing executed by the route outputting procedure storage unit 125 may be integrated.

The drive 13 is used to drive a storage medium 14 inserted into the arithmetic device 10. When the initial position and the target position for an object W is stored in the storage medium 14, the storage device 10 may acquire the initial position and the target position for the object W from the storage medium 14. At this time, the drive 13 functions as the acquisition unit for acquiring the initial position and the target position of the object W. The arithmetic device 10 may also output a route generated by the route generating procedure storage unit 122 and the route correcting procedure storage unit 123 to the storage medium 14. At this time, the drive 13 functions as the output unit for outputting a generated route to the storage medium 14.

The storage medium 14 can also be used instead of the storage unit 12 as the storage medium for storing data stored in the initial conditions storage unit 121 and the route storage unit 124. The storage medium 14 can also be used instead of the storage unit 12 as the storage medium for storing a software program stored in at least one of the route generating procedure storage unit 122 and the route correcting procedure storage unit 123. The storage medium can be a CD-ROM, CD-R, CD-RW, DVD-ROM, DVD-R, DVD-RW, DVD-RAM, LD, magneto-optical disk, or memory card.

The arithmetic unit 15 includes a central processing unit (CPU) 151, random-access memory (RAM) 152, and read-only memory (ROM) 153 as hardware processors.

The CPU 151 is the processor used to retrieve and execute a software program stored in at least one of the route generating procedure storage unit 122, the route correcting procedure storage unit 123, and the route outputting procedure storage unit 125 in the storage unit 12. For example, the CPU 151 can retrieve a software program stored in at least one of the route generating procedure storage unit 122, the route correcting procedure storage unit 123, and the route outputting procedure storage unit 125, store the program or programs in the random-access memory (RAM) 152 and the read-only memory (ROM) 153, and execute the program or programs.

The input device 50 is a device used to input instructions and settings for the robot system 1 and can be a keyboard and mouse. Instructions and settings inputted by the user into the input device 50 are sent to the arithmetic unit 15 in the arithmetic device 10.

The output device 60 can be a display and is used to output a route generated by the route generating procedure storage unit 122 and/or the route correcting procedure storage unit 123 to the user.

The arithmetic device 10 may be configured to generate a route that satisfies the transport conditions based on the results of arithmetic processing. Therefore, the arithmetic device 10 may comprise a hardware processor for executing a process for generating a route that satisfies the transport conditions, volatile memory and/or non-volatile memory for storing a software program executed by the hardware processor for executing the process for generating a route that satisfies the transport conditions, and an external interface for acquiring the transport conditions from an outside unit.

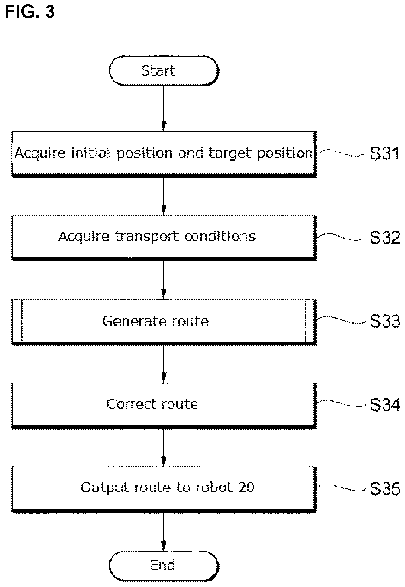

The following is a description of the flow of the route outputting procedure in the present embodiment with reference to FIG. 3. FIG. 3 is an example of a flowchart for the route outputting procedure performed by the arithmetic device 10.

First, the arithmetic unit 15 acquires the initial posture and the target posture of the robot 20 using the external interface 11 (Step S31). Specifically, the external interface 11 acquires the initial posture and the target posture inputted by the user using the input device 50. The external interface 11 may also acquire an initial posture and/or target posture calculated based on information obtained from the imaging device 30 or the angle detecting device 40 or acquire information from the imaging device 30 or angle detecting device 40 and calculate the initial posture and/or target posture. The external interface 11 may acquire the current posture 20 calculated based on values obtained by sensors (encoders) used to detect the angles of the movable shafts in the robot 20 as the initial posture. The arithmetic unit 15 may also acquire values obtained by sensors (encoders) used to detect the angles of the movable shafts in the robot 20 using the external interface 11, detect the current posture of the robot 20, and use it as the initial posture.

The arithmetic unit acquires the transport conditions for an object W to be transported by the robot 20 either concurrently with the processing in Step S31 or before or after the processing in Step S31 (Step S32). The arithmetic unit 15 may acquire transport conditions inputted by the user using the input device 50 via the external interface 11 or may acquire transport conditions stored beforehand in the initial conditions storage unit 121. Any transport conditions may be acquired by the arithmetic unit 15. For example, conditions related to the posture of the object W during transport and conditions related to the environment surrounding the robot 20 may be acquired. In FIG 3, Step S32 is executed after Step S31 but this is just an example. As mentioned above, Step S31 and Step S32 may be executed in parallel or Step S31 may be executed after Step S32. The arithmetic unit 15 stores or overrides and then stores in the initial conditions storage unit 121 information obtained using the external interface 11 or information that has been calculated.

The processing in Step S31 and/or Step S32 can be executed as preprocessing for the process of generating a route (Step S33) and the process for correcting a route (Step S34) described below. This pre-processing can be executed when a work process using the robot 20 is established or started up.

At this time, the arithmetic unit 15 may execute the process of determining whether the initial position and target position acquired in Step S31 satisfies the transport conditions acquired in Step S32 and the process of outputting information notifying the user if the acquired initial position and/or target position does not satisfy the transport conditions to an outside unit (for example, the output device 60) via the external interface 11. In this way, the user can correct a mistakenly inputted initial position or target position when a work process using a robot 20 is established or started up. This prevents the generation of a route for a robot 20 based on transport conditions unintentionally established by the user.

Preferably, in this preprocessing, the start point (initial position) and the end point (target position) for transporting an object W remains unchanged or only has to be changed slightly depending on the object W. Preferably, for example, an object W held at a predetermined position and posture is stored in a box using a parts feeder. In this case, a route can be generated and corrected by repeatedly using transport conditions stored in a preprocessing step, reducing the amount of time required to calculate and output the route.

Next, the arithmetic unit 15 executes the route generating procedure based on the program stored in the route generating procedure storage unit 122 (Step S33). The arithmetic unit 15 places a point S indicating the initial posture and a point G indicating the target posture in configuration space based on the program stored in the route generating procedure storage unit 122 and generate a route in real space excluding obstacle areas Co and non-conforming angle areas Cp in the configuration space. The technique used in the route generating process will be described below in greater detail.

Afterwards, the arithmetic unit 15 calls the program stored in the route correcting procedure storage unit 123 and executes the process of correcting a route, including, for example, smoothing and establishing a shortcut, on the route generated based on the program stored in the route generating procedure storage unit 122 (Step S34). The arithmetic unit 15 corrects the route generated based on the program stored in the route generating procedure storage unit 122 in real space excluding obstacle areas Co and non-conforming angle areas Cp in the configuration space. The process of correcting the route does not have to be performed and can be performed only if necessary.

The arithmetic unit 15 outputs the route generated based on the program stored in the route outputting procedure storage unit 125 (including a corrected route) to the robot 20 via the external interface 11 (Step S35). The robot 20 operates according to the route received from the arithmetic device 10 and transports an object W from the initial position to the target position. Note that the route does not have to be outputted to the robot 20. For example, the arithmetic unit 15 may output an approximate model of the robot 20 and the route to an output device 60 such as a display to reproduce the movements of the robot 20 on the output device 60.

In this explanation, the process of generating a route based on the program stored in the route generating procedure storage unit 122 (Step S33) and the process of correcting a route based on the program stored in the route correcting procedure storage unit 123 (Step S34) were separate, but the route correcting procedure may be included in the route generating procedure.

The following is a detailed description of the route generating procedure. In this procedure, a start point (initial position) and/or an end point (target position) for transporting an object W are determined, and this is especially suitable for a case in which each object W is different. For example, it is suitable for a process in which a plurality of objects W placed irregularly on a conveyor belt are sorted and placed in a plurality of boxes depending on the type of object W. In the descriptions of the following examples, the arithmetic unit 15 executes different types of arithmetic processing to generate a route by retrieving and executing in the arithmetic unit 15 software stored in the route generating procedure storage unit 122.

### < Example 1 >

In Example 1, a route generating procedure based on rapidly-exploring random tree (RRT), one type of random sampling method, is described. In the present example, the arithmetic unit 15 places a point in configuration space and generates routes by repeatedly connecting this point to points already placed in configuration space.

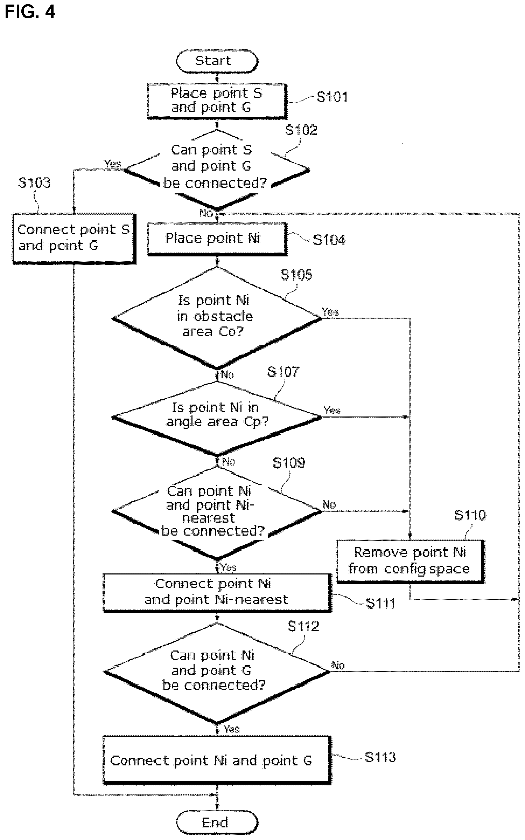

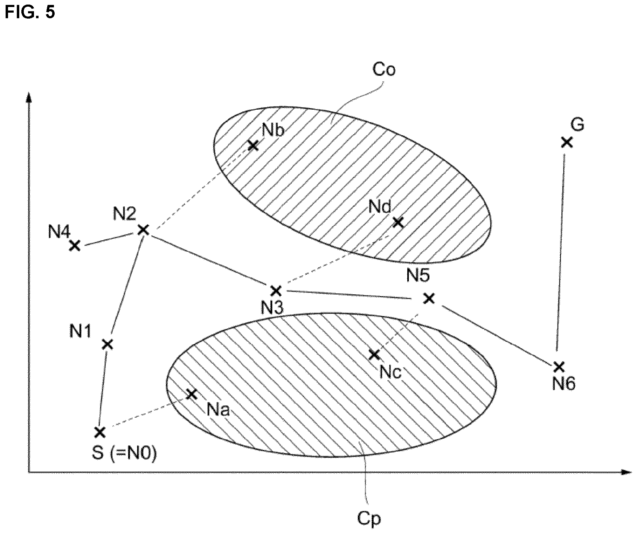

FIG. 4 is an example of a flowchart for a route generating procedure based on RRT. FIG. 5 is a diagram showing an example of configuration space in a route generating procedure based on RRT. In the present example, obstacle areas Co are used to determine whether transport conditions related to the environment surrounding the robot 20 (second conditions) have been satisfied and non-conforming angle areas Cp are used to determine whether the transport conditions related to the posture of the object are satisfied when the robot 20 transports an object W from the first position to the second position (first conditions). Note that areas do not have to be used to determine whether or not the first conditions and the second conditions have been satisfied. For example, points in configuration space indicating the posture of the robot 20 can be converted to a predetermined format using calculations based on forward kinematics and the converted values can be compared to transport conditions indicated by the user to determine whether or not the transport conditions have been satisfied.

The arithmetic unit 15 places point S indicating the initial posture and point G indicating the target posture of the robot 20 in configuration space (Step S101) and then determines whether or not point S and point G can be connected (Step S102). Specifically, the arithmetic unit 15 determines that the two points can be connected if the line segment connecting point S and point G do not overlap with an obstacle area Co or a non-conforming angle area Cp. If the line segment connecting point S and point G overlaps with an obstacle area Co or a non-conforming angle area Cp, the arithmetic unit 15 determines that the two points cannot be connected. In this case, the robot 20 collides with an obstacle and/or conditions related to the posture of the object W are not satisfied.

When the arithmetic unit 15 has determined that point S and point G can be connected (Step S102: Yes), the process advances to Step S103. When the arithmetic unit 15 has determined that point S and point G cannot be connected (Step S102: No), the process advances to Step S104.

The arithmetic unit 15 connects point S and point G to generate a route and the process is ended (Step S103).

The arithmetic unit 15 places (samples) a point Ni in configuration space (Step S104). This point is different from point S and point G and represents the posture of the robot 20, that is, a predetermined posture of a robot 20 that is a six-shaft vertically articulated robot. This posture is a candidate for an intermediate position (posture) between the initial position (posture) and the target position (posture).

The arithmetic unit 15 determines whether or not the robot 20 will collide with an obstacle in the environment based on the posture of the robot 20 expressed by the point placed in Step S104 (Step S105). Specifically, the arithmetic unit 15 determines that the robot 20 will collide with an obstacle in the environment if the point placed in Step S104 is in an obstacle area Co (for example, points Nb, Nd in FIG. 5). Alternatively, the arithmetic unit 15 determines that the robot 20 will not collide with an obstacle in the environment if the point placed in Step S104 is not in an obstacle area Co (for example, points N1-N5, Na and Nc in FIG. 5).

When the arithmetic unit 15 has determined that the robot 20 will collide with an obstacle in the environment in Step S105 (Step S105: Yes), point Ni placed in Step S104 is removed from the configuration space (Step S110) and the process returns to Step S104. Alternatively, when the arithmetic unit 15 has determined that the robot 20 will not collide with an obstacle in the environment in Step S105 (Step S105: No), the process advances to Step S107.

The arithmetic unit 15 determines whether or not the object W held by the robot 20 satisfies the conditions related to posture (Step S107).

Specifically, when the point placed in Step S104 is in a non-conforming angle area Cp determined based on the conditions related to the posture of the object W (for example, points Na and Nc in FIG. 5), the arithmetic unit 15 determines that the posture of the object W grasped by the posture of the robot 20 expressed by the point does not satisfy the conditions. When the point placed in Step S104 is not in a non-conforming angle area Cp (for example, points N1-N5 in FIG. 5), the arithmetic unit 15 determines that the posture of the object W grasped by the posture of the robot 20 expressed by the point satisfies the conditions.

When the arithmetic unit 15 has determined that the point placed in Step S104 is in a non-conforming angle area Cp, that is, the posture of the object W does not satisfy the conditions related to posture (Step S107: Yes), point Ni placed in Step S104 is removed from the configuration space (Step S110) and the process advances to Step S104. Alternatively, when the arithmetic unit 15 has determined that the posture of the object W satisfies the conditions related to posture (Step S107: No), the process advances to Step S109.

The arithmetic unit 15 determines whether or not point Ni placed in Step S104 can be connected to point Ni-nearest placed nearest to point Ni among point S indicating the initial posture and points connected already (Step S109). Specifically, the arithmetic unit 15 determines that the two points can be connected if a line segment connecting point Ni placed in Step S104 and point Ni-nearest placed nearest to point Ni among already placed points N0, .... Ni-1 (where point S is point N0) does not overlap with an obstacle area Co and a non-conforming angle area Cp.

When the arithmetic unit 15 has determined that point Ni placed in Step S104 and point Ni-nearest cannot be connected (Step S109: No), point Ni placed in Step S104 is removed (Step S110) and the process returns to Step S104. Alternatively, when the arithmetic unit 15 has determined that point Ni placed in Step S104 and point Ni-nearest can be connected (Step S109: Yes), the process advances to Step S111.

The arithmetic unit 15 connects point Ni placed in Step S104 and previously placed point Ni-nearest (Step S111).

The arithmetic unit 15 determines whether point Ni can be connected to point G indicating the target posture (Step S112). Specifically, the arithmetic unit 15 determines that the two points can be connected if a line segment connecting point Ni and point G does not overlap with an obstacle area Co and a non-conforming angle area Cp.

When the arithmetic unit 15 has determined that point Ni and point G cannot be connected (Step S112: No), 1 is added to value i, the process returns to Step S104, and the new point Ni+1 is sampled. Alternatively, when the arithmetic unit 15 has determined that point Ni and point G can be connected (Step S112: Yes), the process advances to Step S113. The process from Step S104 to Step S112 is repeated in this way until a point can be connected to point G.

The arithmetic unit 15 connects point Ni and point G and generates a route (Step S113).

The arithmetic unit 15 generates a route (point sequence T = (S, N1, N2, ..., G)) to transport object W from the initial position (point S) to the target position (point G) via intermediate positions (points N1, N2, ...). In FIG. 5, point sequence T = (S, N1, N2, N3, N5, N6, G) is generated as the route.

The processing in Step S110 is not limited to simply removing point Ni from the configuration space. For example, it can establish a predetermined area using point Ni as a reference and, in Step S104, search for point Ni in the area by sampling point Ni in the established area. Alternatively, it can establish a predetermined area using point Ni as a reference and, in Step S104, search for point Ni in another area by sampling point Ni in an area other than the established area.

Note that the route generating procedure was described above as a procedure in which the initial position (point S) is connected to the target position (point G) by placing points along the way. However, point Ni may be placed from both the initial position (point S) and from the target position (point G). In other words, points placed in order from the initial position (point S) are established as Nsi, points placed in order from the target position (point G) are established as Ngi, points are placed in order from point S and point G, and a route connecting point S and point G is designed by connecting point Nsi and point Ngi in a predetermined route planning space (configuration space).

### < Example 2 >

In Example 2, a route generating procedure based on a probabilistic road map (PRM), one type of roadmap, is described. In the present example, the arithmetic unit 15 places a plurality of points in configuration space, extracts the points outside of obstacle areas Co and non-conforming angle areas Cp, and generates a route from the initial posture to the target posture by connecting these points.

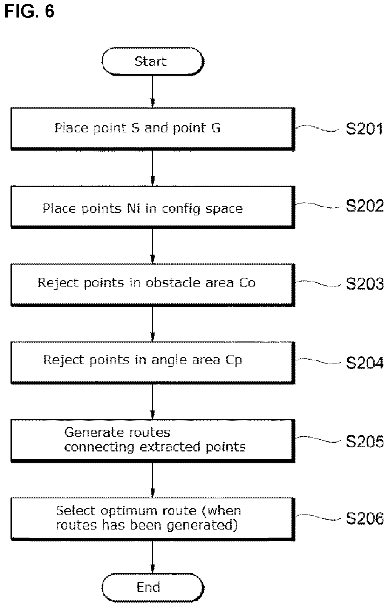

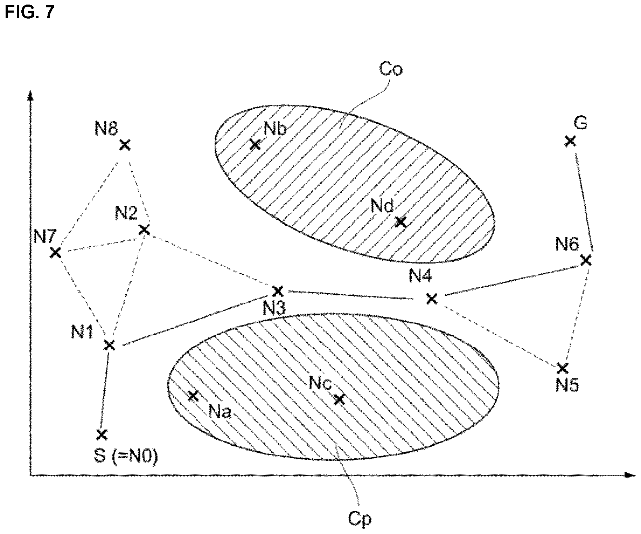

FIG. 6 is an example of a flowchart for a route generating procedure based on PRM. FIG. 7 is a diagram showing an example of configuration space in a route generating procedure based on PRM. In the present example, obstacle areas Co are used to determine whether transport conditions related to the environment surrounding the robot 20 (second conditions) have been satisfied and non-conforming angle areas Cp are used to determine whether the transport conditions related to the posture of the object are satisfied when the robot 20 transports an object W from the first position to the second position (first conditions). Note that areas do not have to be used to determine whether or not the first conditions and the second conditions have been satisfied. For example, points in configuration space indicating the posture of the robot 20 can be converted to a predetermined format using calculations based on forward kinematics and the converted values can be compared to transport conditions indicated by the user to determine whether or not the transport conditions have been satisfied.

The arithmetic unit 15 places point S indicating the initial posture and point G indicating the target posture of the robot 20 in configuration space (Step S201).

The arithmetic unit 15 randomly places a plurality of points Ni in configuration space (Step S202).

Among the points Ni placed in Step S202, the arithmetic unit 15 removes points in obstacle areas Co and extracts points outside of obstacle areas Co (Step S203). In FIG. 7, points Nb and Nd in the obstacle area Co are removed.

Next, the arithmetic unit 15 removes points in non-conforming angle areas Cp and extracts points outside of non-conforming angle areas Cp (Step S203). In FIG. 7, points Na and Nc in the non-conforming angle area Cp are removed, and the remaining points N1-N8 are extracted.

The arithmetic unit 15 generates a route connecting point S indicating the initial posture to point G indicating the target posture based on points extracted in Step S204 (Step S205). Specifically, the arithmetic unit 15 generates a route by connecting these points using line segments that do not overlap with an obstacle area or non-conforming angle area. When one point is connected to another point, points may be connected within a predetermined distance range between points. For example, in FIG. 7, point N1 is connected to points S, N2, N3 and N7 near point N1. In FIG. 7, connections between points are indicated using solid lines or dotted lines.

When a plurality of routes has been generated from the extracted points, the arithmetic unit 15 selects the optimum route using an evaluation function based on predetermined criteria (Step S206). For example, the evaluation function may be an evaluation function used to select the route with the shortest route distance from point S to point G. In FIG. 7, the selected route is point sequence T = (S, N1, N3, N4, N6, G) connected by solid lines. The evaluation function is not limited to route length. The route may be selected based on other criteria.

Note that the processing in Steps S203 and S204 is not limited to rejecting points in each of the areas. For example, they can establish a predetermined area using point Ni as a reference and, returning to Step S202, place a plurality of points Ni in the area. Alternatively, they can establish a predetermined area using point Ni as a reference and, returning to Step S202, place a plurality of points Ni outside of the established area. Also, after rejecting points Ni, they can, returning to Step S202, place new points Ni in the configuration space. In this way, a number of points Ni can be secured as candidates for route generation even when points Ni have been rejected, and failure to generate a route can be minimized even when there are a lot of obstacles and route generating conditions are difficult.

### < Example 3>

In Example 3, a route generating procedure based on the artificial potential method is described. In the present example, the arithmetic unit 15 calculates the potential in an area in which the robot 20 and object W can be positioned and generates a route based on the potential. For example, the arithmetic unit 15 calculates the potential in an area in which the robot 20 and object W can be positioned using an evaluation function.

The evaluation function evaluates an area in which the robot 20 and object W can be positioned in configuration space, establishing repulsive force at the point representing the initial posture of the robot 20 and in obstacle areas Co and non-conforming angle areas Co, and establishing attractive force at point G indicating the target posture of the robot 20. In other words, the conditions related to obstacles present in the environment surrounding the robot 20 and the posture of the object W are defined based on an evaluation function. The arithmetic unit 15 may use an evaluation function that limits, for example, the rotation angle of the fourth link 25 relative to the third link 24, the rotation angle of the fifth link 26 relative to the fourth link 25, and the rotation angle of the end effector 28 relative to the fifth link 26 to predetermined ranges.

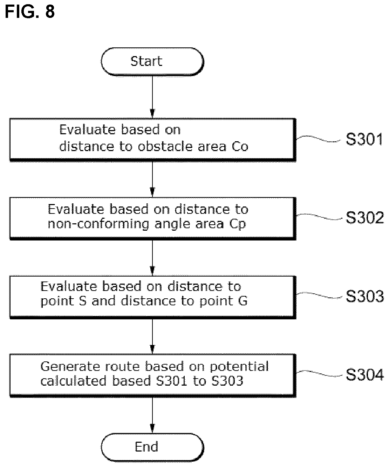

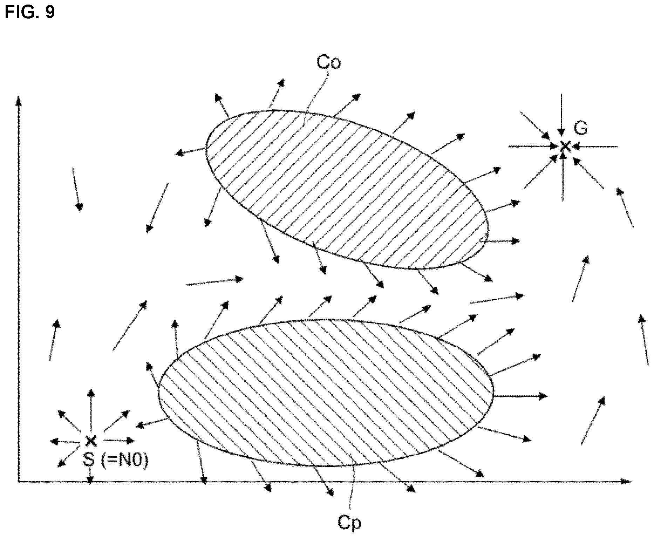

FIG. 8 is an example of a flowchart for a route generating procedure based on the potential method. FIG. 9 is a diagram showing an example of configuration space in a route generating procedure based on the potential method.

First, the arithmetic unit 15 assigns a weight to a field inside configuration space using an evaluation function that changes the contrast based on the distance to an obstacle (Step S301). For example, a field in configuration space is evaluated using an evaluation function that establishes repulsive force in obstacle areas Co and lowers the potential value as the distance from an obstacle area Co increases.

Next, the arithmetic unit 15 assigns a weight to a field inside configuration space using an evaluation function that changes the contrast based on the posture of the object (Step S302). For example, a field in configuration space is evaluated using an evaluation function that establishes repulsive force in non-conforming angle areas Cp and lowers the potential value as the distance from a non-conforming angle area Cp increases.

In this way, the arithmetic unit 15 evaluates a field in configuration space based on obstacle areas Co and non-conforming angle areas Cp. This processing is preferably performed beforehand but does not have to be performed beforehand. The evaluation function changing the contrast based on the distance to obstacles and the evaluation function changing the contrast based on the posture of the object W may be expressed as a single function.

The arithmetic unit 15 assigns a weight to a field in configuration space using an evaluation function that changes the contrast based on the distance from point S indicating the initial posture and point G indicating the target posture based on the initial posture and target posture of the robot inputted via the external interface 11 or stored in the initial conditions storage unit 121 (Step S303). For example, repulsive force is established at point S and attractive force is established at point G in configuration space, and a field is evaluated using an evaluation function that increases the potential value when the distance from point S is shorter and reduces the potential value when the distance from point G is shorter.

The arithmetic unit 15 calculates the potential value at each position in configuration space based on the distance to an obstacle, the posture of the object W, and the distance between point S and point G, and generates a route based on the calculated potential values (Step S304). For example, the potential of a field is evaluated by adding or multiplying values assigned in each of Steps S301 to S303. The arrows depicted in FIG. 9 indicate the evaluated potential vectors. The arithmetic unit 15 generates a route with the lowest route contrast from point S to point G based on the calculated potential. Unlike the routes generated in Example 1 and Example 2, these routes are often continuous.

### < Example 4 >

In Example 4, a route generating procedure based on trajectory optimization is described. In the present example, the arithmetic unit 15 generates a route for a robot 20 by solving the optimization problem of cost functions related to the placement of points in configuration space. A cost function can be set based on, for example, the distance of the robot 20 or object W to an obstacle, the smoothness of the route in configuration space, the maximum torque value of the robot 20, and the rotation angle of the first link 22, second link 23, third link 24, fourth link 25, fifth link 26, or end effector 28. The cost related to the distance of the robot 20 or object W to an obstacle may be changed based on the distance of both. Specific techniques for trajectory optimization include STOMP (stochastic trajectory optimization for motion planning) and CHOMP (covariant Hamiltonian optimization for motion planning).

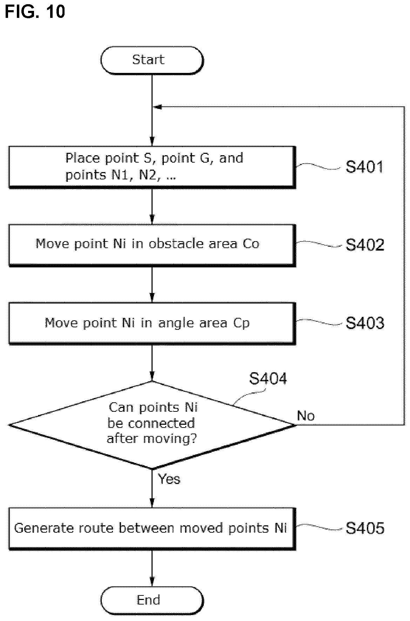

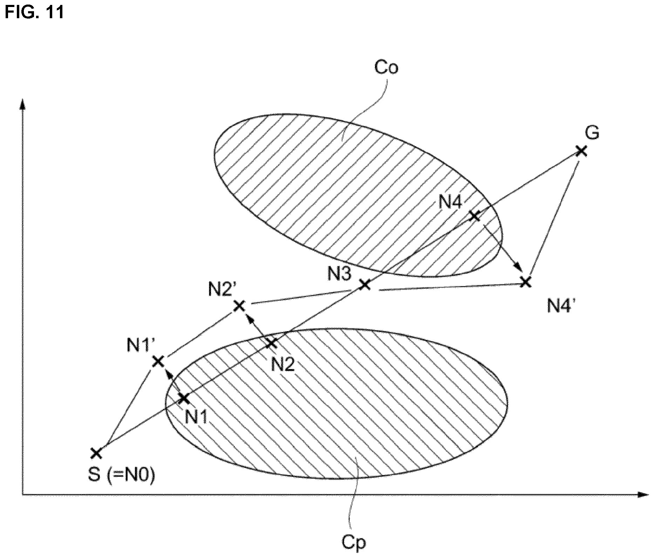

FIG. 10 is an example of a flowchart for a route generating procedure based on trajectory optimization. FIG. 11 is a diagram showing an example of configuration space in a route generating procedure based on trajectory optimization. In route optimization, a route is generated when point S indicating the initial posture is connected to point G indicating the target posture via points N1, N2, ... placed in configuration space by moving point Ni so that the line segments connecting these points and adjacent points do not overlap with either an obstacle area Co or a non-conforming angle area Cp.

First, the arithmetic unit 15 places point S indicating the initial posture and point G indicating the target posture and a plurality of points Ni on the line segment connecting these points. For example, the line segment connecting point S and point G is divided into N equal intervals and N-1 points Ni (i = 1, 2, ..., N-1) are placed. In FIG. 11, four points N1-N4 are placed on the line segment connecting point S to point G.

Next, among the plurality of points Ni placed on the line segment connecting point S to point G, a point Ni in an obstacle area Ni is moved outside of the obstacle area Co (Step S402). At this time, point Ni is preferably moved to a position that minimizes the cost function. In FIG. 11, point N4 is in obstacle area Co so it is moved to point N4' outside of the obstacle area Co. Note that this may be designed so that the cost function is optimized as the output value increases.

Also, among the plurality of points Ni, the arithmetic unit 15 extracts any point Ni in a non-conforming angle area Cp and moves it outside of the non-conforming angle area Cp (Step S403). At this time, point Ni is preferably moved to a position that minimizes the cost function. In FIG. 11, point N1 and point N2 are in non-conforming angle area Cp so they are moved to point N1' and point N2' outside of the non-conforming angle area Cp.

The arithmetic unit 15 determines whether or not the moved points Ni can be connected without overlapping with an obstacle area Co or non-conforming angle area Cp (Step S404). If all of the points can be connected without any overlapping portions (Step S404: Yes), the moved point sequence T is generated as a route (Step S405). In FIG. 11, point sequence T = (S, N1', N2', N3, N4', G) is generated as the route.

In Step S404, when even one line segment connecting points overlaps with an obstacle area Co or non-conforming area Cp (Step S404: No), returning to Step S401, the arithmetic unit 15 searches for another route by moving points Ni to another position. When a route cannot be generated even when points Ni are moved to another position, the arithmetic unit 15 may search for another route by changing the number of points placed on the line segment connecting point S to point G. Note that the order of the arithmetic processing in Step S402 and the arithmetic processing in Step S403 can be executed in a different order. Also, the arithmetic processing in Step S402 and the arithmetic processing in Step S403 may be performed at the same time based on a predetermined cost function.

Note that in each example the arithmetic unit 15 may execute a step (not shown) of determining whether point S given as the initial position (initial posture) and/or point G given as the target position (target posture) satisfies the transport conditions acquired in Step S32. If point S and/or point G does not satisfy the transport conditions at this time, the arithmetic unit 15 may also execute a step (not shown) of resetting a point S or point G that satisfies the transport conditions. These steps are preferably executed before a route connecting point S and point G has been generated or corrected.

A route generating procedure including these steps can be suitably applied to bulk picking.

In bulk picking, a plurality of objects W are stored in a box in irregular positions and with irregular postures. These steps can be executed to automatically identify and pick up objects W that satisfy the conditions.

### < Example 5 >

In Example 5, a route generating procedure based on transport conditions is described. Transport conditions include, for example, conditions restricting the posture that an object W can assume and conditions related to information on the environment surrounding the object W. Examples of conditions restricting the posture that an object W can assume include conditions related to restrictions on rotation angles around the axes in a work coordinate system (such as roll angle, pitch angle, and yaw angle). Conditions related to information on the environment surrounding the object W include conditions keeping the object W from experiencing interference from obstacles in its surroundings.

In the present example, "configuration space" means space defined by the degree of operational freedom conferred on the robot 20 and is separated from the "real space" in which the object W exists. In the present example, conditions restricting the posture that an object W can assume in real space in which the object W exists are the "first conditions" and conditions related to information on the environment surrounding the robot are the "second conditions". Also, the "first position" is point S (the initial position) and the "second position" is point G (the target position). However, the present invention is not limited to this.

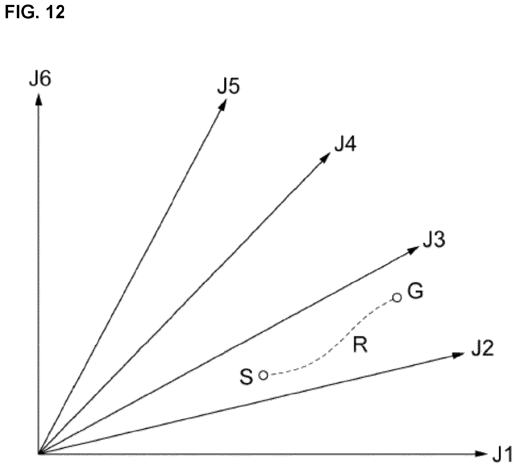

FIG. 12 is a diagram used to explain the calculations for the first position (point S) and the second position (point G). The arithmetic unit 15 calculates the first position (point S) and the second position (point G) in the configuration space from the first position and the second position in real space so that the possibility that a route R between the first position (point S) and the second position (point G) in configuration space will satisfy the first conditions. For example, the arithmetic unit 15 selects the combinations of inverse kinematics solutions that reduce the distance between the first position (point S) and the second position (point G) in configuration space. These calculations can solve the problem of some routes between the first position (point S) and the second position (point G) not satisfying the first conditions even when the first position (point S) and the second position (point G) satisfy the first conditions. The cause of this problem is that there are many inverse kinematics solutions for mapping the first position (point S) and the second position (point G) in real space to configuration space. In this case, a solution cannot be found by searching for a route between the first position (point S) and the second position (point G) that satisfies the first conditions. Note that the configuration space in FIG. 12 has six degrees of freedom J1-J6.

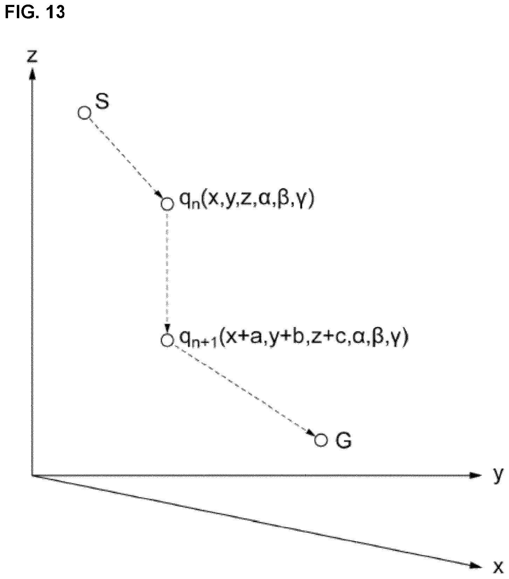

FIG. 13 is a diagram used to explain the calculations for one or more intermediate points qn, qn+1. The nth intermediate point qn on the route from the first position (point S) to the second position (point G) has information related to the intermediate point (x, y, z) and information related to the intermediate posture (α, β, y) as relative coordinates in the work coordinate system relative to the reference coordinate system of real space, or as relative coordinates in the tool coordinate system relative to the reference coordinate system of real space. For example, in the work coordinate system, intermediate points have information related to the intermediate position and intermediate posture of an object W along the route from the first position (point S) to the second position (point G). Here, the intermediate position in a work coordinate system indicates the coordinate position of the object W at intermediate point qn and the intermediate posture indicates the inclination (such as the roll angle, pitch angle, and yaw angle) of the object W at intermediate point qn. In a tool coordinate system, an intermediate point has information related to the intermediate position and intermediate posture of the hand of the robot 20 (such as an end effector 28) on the route from the first position (point S) to the second position (point G). Here, the intermediate position in a tool coordinate system indicates the coordinate position of the hand of the robot 20 (such as an end effector 28) at intermediate point qn and the intermediate posture indicates the inclination (such as the roll angle, pitch angle, and yaw angle) of the hand of the robot 20 (such as an end effector 28) at intermediate point qn. Information on the intermediate position and intermediate posture in a work coordinate system or tool coordinate system can also be expressed as the intermediate position and the intermediate posture in a reference coordinate system by using a transformation matrix. The intermediate position and the intermediate posture of the hand of the robot 20 (such as an end effector 28) can be calculated from the intermediate position and the intermediate posture of the object W. In addition to the first conditions, the arithmetic unit 15 calculates one or more intermediate points (qn, qn+1) satisfying the second conditions, the one or more intermediate points (qn, qn+1) connecting the first position (point S) and the second position (point G). When intermediate points are generated stochastically in configuration space, there is a high probability that an intermediate point will be generated that does not satisfy the first conditions in real space. Therefore, when an intermediate point satisfying the first conditions is generated in real space and the generated intermediate point also satisfies the second conditions, this can be used as an intermediate point in configuration space to efficiently search for an intermediate point that satisfies the first conditions and the second conditions.

For example, by changing the information (x, y, z) related to the intermediate position without changing the information (α, β, γ) related to the intermediate posture of an intermediate point qn satisfying the first conditions, the arithmetic unit 15 may calculate another intermediate point in real space that satisfies the first conditions. At this time, intermediate point qn+1 has information (x+a, y+b, z+c) related to the intermediate position and information (α, β, γ) related to the intermediate posture referencing the coordinate system in real space. By using this calculation method, an intermediate point qn+1 satisfying the first conditions can be determined from another intermediate point satisfying the first conditions with a simple calculation. By adding, for example, random numbers a, b and c to x, y and z, respectively, the arithmetic unit 15 may calculate information (x+a, y+b, z+c) related to the intermediate position of an intermediate point qn+1 from information (x, y, z) related to the intermediate position of another intermediate point. Instead of using addition, the arithmetic unit 15 may also use subtraction, division, multiplication, or a function operation. If the intermediate point qn+1 determined in this way does not satisfy the second conditions, it may be projected into constrained space that satisfies the second conditions.

The arithmetic unit 15 generates a route from the first position (point S) to the second position (point G) via one or more intermediate points (qn, qn+1). The arithmetic unit 15 outputs the route generated in this way to the robot 20 via the external interface 11.

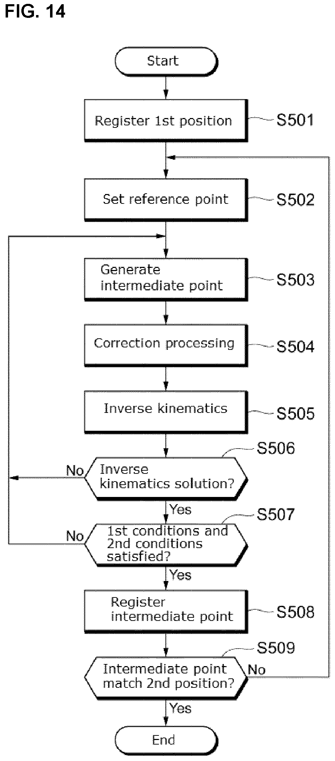

FIG. 14 is a flowchart of a route generating procedure with intermediate points. First, the arithmetic unit 15 registers position information (such as information on the initial position) and posture information (such as information on the initial posture) on the first position (point S) in the route information (Step S501). Here, route information means information on a route from the first position (point S) to the second position (point G) via one or more intermediate points (qn, qn+1).

The arithmetic unit 15 sets the point with position information and posture information registered in the route information in Step S501 as the reference point (Step S502). The "reference point" means the same thing as the intermediate point prior to the intermediate point generated in Step S503 described below. For example, if the intermediate point generated in Step S503 is qn+1, intermediate point qn is set as the reference point. If the intermediate point generated in Step S503 is qn, the first position (point S) is set as the reference point.

The arithmetic unit 15 adds a, b and c, respectively, to x, y and z in the position information (x, y, z) for the reference point and generates an intermediate point having position information (x+a, y+b, z+c) and posture information (α, β, y) (Step S503). This posture information (α, β, y) is the same as the posture information (α, β, y) for the reference point.

The arithmetic unit 15 corrects the position information or the posture information so that the intermediate point generated in Step S503 satisfies the second conditions in addition to the first conditions (Step S504).

The arithmetic unit 15 performs an inverse kinematics calculation on the intermediate point corrected in Step S504 and calculates the posture of the intermediate point (Step S505).

The arithmetic unit 15 determines whether or not there is a solution to the inverse kinematics calculation in Step S505 (Step S506).

When the result of the determination in Step S506 is Yes, the arithmetic unit 15 determines whether or not the route between the reference point set in Step S502 and the intermediate point generated in Step S503 satisfies the first conditions and the second conditions (Step S507).

When the result of the determination in Step S507 is Yes, the arithmetic unit 15 registers the position information and the posture information on the intermediate point generated in Step S503 in the route information (Step S508).

After the registration process in Step S508, the arithmetic unit 15 determines whether or not the position information and the posture information on the intermediate point generated in Step S503 matches the position information (such as information on the target position) and the posture information (such as information on the target posture) for the second position (point G) (Step S509). When the result of the determination in Step S509 is No, the arithmetic unit 15 returns to the processing in Step S502 because the intermediate point generated on the route from the first position (point S) to the second position (point G) is insufficient.

Note that when the result of the determination in Step S506 or Step S507 is No, the arithmetic unit 15 returns to the processing in Step S503.

In order to realize efficient route planning for a robot 20, the arithmetic unit 15 may calculate intermediate points (qn, qn+1) in the direction from the first position (point S) to the second position (point G). For example, when information related to the intermediate position (x+a, y+b, z+c) of an intermediate point qn+1 is calculated from information (x, y, z) related to another intermediate point qn by adding a, b and c to x, y and z, respectively, the values for a, b and c may be adjusted so that intermediate point qn+1 is in the direction of the second position (point G). Arithmetic processing used to change the information related to the intermediate position of an intermediate point qn so that the intermediate position of another intermediate point qn+1 is in the direction of the second position (point G) is called "bias processing" in the present description.

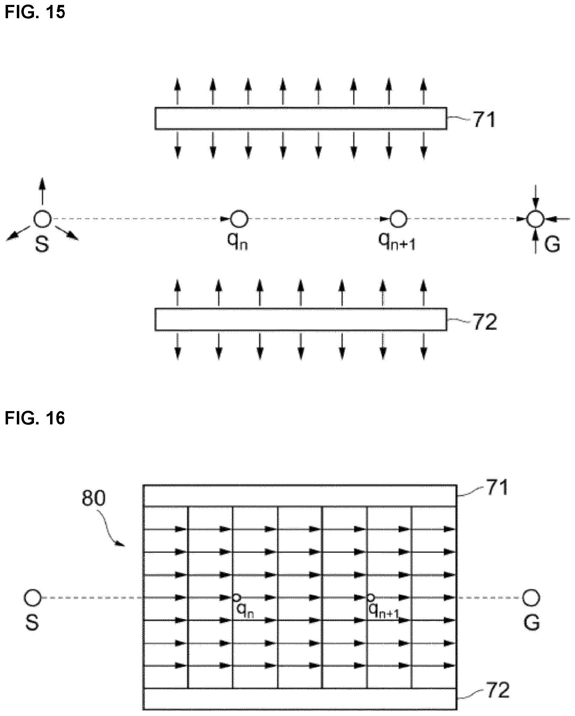

FIG. 15 is a diagram used to explain an example of bias processing. Here, the evaluation function is the same as the one for the potential method in Example 3. This evaluation function changes the potential value based on the distance from the intermediate point to the first position (point S), the second point (point G) and obstacles 71, 72. For example, repulsive force is established for the first position (point S) and the obstacles 71, 72, and attractive force is established for the second position (point G). In this way, the potential value of the evaluation function increases as the distance from the first position (point S) or the obstacles 71, 72 becomes shorter, and the potential value of the evaluation function decreases as the distance to the second position (point G) becomes shorter. The arithmetic unit 15 performs bias processing using this evaluation function so that the potential value of the evaluation function decreases. In this way, bias processing can be performed in a direction away from the obstacles 71, 72 and towards the second position (point G).

FIG. 16 is a diagram used to explain another example of bias processing. In this example, the space between the obstacles 71, 72 is divided into three-dimensional shapes (such as a cubical, rectangular, or spherical solid) and the divided three-dimensional shapes are linked in a directed graph 80 towards the second position (point G). The arithmetic unit 15 performs bias processing so that intermediate point qn+1 is generated in the direction of the directed graph 80. In this way, the bias processing is performed in the direction of the second position (point G) without interfering with the obstacles 71, 72. The type and size of the three-dimensional shapes do not have to be the same. A combination of three-dimensional shapes of different types and shapes may be used to conform to the shapes of the obstacles 71, 72.

For ease of explanation, two intermediate points are depicted in the drawings. However, three or more intermediate points may also be used.

In the embodiments of the present invention described above, the arithmetic device 10 generates a route for a robot 20 entirely from configuration space excluding obstacle areas Co and non-conforming angle areas Cp. In this way, when a robot 20 transports an object W from an initial posture to a target posture, the arithmetic device 10 enables the robot 20 to operate along a route satisfying conditions related to the posture of the object W while avoiding interference from obstacles. Therefore, the arithmetic device 10 enables the object W transported by the robot 20 from the initial position to the target position to be used smoothly in the next step. In Examples 1, 2 and 4, the arithmetic device 10 searches for intermediate positions that satisfy the conditions related to the posture of the object W and generates a route to transport the object W from the initial position to the target position via intermediate positions. In Examples 3 and 4, the arithmetic device 10 generates a route to transport an object W from an initial position to a target position using a predetermined function (evaluation function or cost function) that satisfies the conditions related to obstacles surrounding the robot 20 and the conditions related to the posture of the object W.

The user can set or change the conditions related to the posture of the object W. In this way, the arithmetic device 10 can generate a route based on the wishes of the user.

The storage unit 12 stores the initial values for the conditions related to the posture of the object W and the arithmetic device 10 may acquire the initial values as the conditions related to the posture of the object W. In this way, the arithmetic device 10 can generate a route that satisfies the conditions related to the environment in which the robot 20 and the object W are located and conditions related to the posture of the object W transported by the robot 20 from the initial position to the target position.

The embodiments described above were provided so that the present invention could be more easily understood and are not intended to limit the invention. The elements in the embodiments and their arrangement, materials, conditions, shapes and sizes are not limited to those depicted, and can be changed if appropriate. Also, the structures shown in the different embodiments can be partially replaced or combined. The embodiments described above are provided in all respects as examples and should not be construed as limiting. For example, each of the processing steps can be executed in any order or concurrently as long as no conflicts occur during processing.

### Reference Signs List

1: Robot system
10: Arithmetic device
11: External interface (acquisition unit, output unit)
12: Storage unit
13: Drive (acquisition unit, output unit)
14: Storage medium
15: Arithmetic unit
121: Initial conditions storage unit
122: Route generating procedure storage unit
123: Route correcting procedure storage unit
124: Route storage unit
125: Route outputting procedure storage unit
20: Robot
30: Imaging device
40: Angle detecting device
50: Input unit
60: Output unit
W: Object

## Claims

1. A route outputting method using an arithmetic device (10) including an output unit (11, 13, 60) and an arithmetic unit (15) when a robot (20) having a plurality of movable shafts transports an object (W) from a first position (S) to a second position (G), the arithmetic unit (15) executing the steps of:
calculating the first position (S) and the second position (G) satisfying first conditions for restricting the posture the object (W) can take in the real space where the object (W) is present;
calculating one or more intermediate points (qn, qn+1) in the real space satisfying second conditions related to robot environment information in addition to the first conditions, the one or more intermediate points (qn, qn+1) connecting the first position (S) and the second position (G);
generating a route (R) from the first position (S) to the second position (G) via the one or more intermediate points (qn, qn+1); and
outputting the generated route (R) using the output unit (11, 13, 60), wherein each
intermediate point (qn, qn+1) includes information related to the intermediate position and intermediate posture of the object (W) or the robot hand on the route from the first position (S) to the second position (G), and **characterized in that**
the arithmetic unit (15) calculates another intermediate point in the real space satisfying the first conditions by changing the information (x, y, z) related to the intermediate position without changing the information (α,β,γ) related to the intermediate posture of an intermediate (qn, qn+1) point obtained in the step of calculating one or more intermediate points (qn, qn+1) in the real space.

2. The route outputting method according to claim 1, wherein the arithmetic unit (15) calculates the first position (S) and the second position (G) on a route (R) between the first position (S) and the second position (G) satisfying the first conditions in the step of calculating the first position (S) and the second position (G).

3. The route outputting method according to claim 1, wherein information related to the intermediate position at one intermediate point (qn, qn+1) is changed so that the intermediate position at another intermediate point (qn, qn+1) heads towards the second position (G) in the step of calculating one or more intermediate points (qn, qn+1) in the real space.

4. The route outputting method according to claim 3, wherein the arithmetic unit (15) changes the information related to the intermediate position at the one intermediate point (qn, qn+1) so that a potential value of an evaluation function decreases, wherein the potential value of the evaluation function increases as the distance from the first position (S) becomes shorter, and the potential value of the evaluation function decreases as the distance to the second position (G) becomes shorter.

5. The route outputting method according to claim 3, wherein the arithmetic unit (15) changes the information related to the intermediate position at the one intermediate point (qn, qn+1) so that the intermediate position at another intermediate point (qn, qn+1) heads towards the second position (G) along a directed graph (80).

6. A system outputting a route when a robot (20) having a plurality of movable shafts transports an object (W) from a first position (S) to a second position (G), the system comprising:
an arithmetic unit (15); and
an output unit (11, 13, 60),
the arithmetic unit (15) being configured to:
calculate the first position (S) and the second position (G) satisfying first conditions for restricting the posture the object (W) can take in the real space where the object (W) is present;
calculate one or more intermediate points (qn, qn+1) in the real space satisfying second conditions related to robot environment information in addition to the first conditions, the one or more intermediate points (qn, qn+1) connecting the first position (S) and the second position (G); and
generate a route (R) from the first position (S) to the second position (G) via the one or more intermediate points (qn, qn+1),
the output unit (11, 13, 60) being configured to output the generated route (R), wherein each intermediate point (qn, qn+1) includes information related to the intermediate position and intermediate posture of the object (W) or the robot hand on the route from the first position (S) to the second position (G), and **characterized in that** the arithmetic unit (15) calculates another intermediate point in the real space satisfying the first conditions by changing the information (x, y, z) related to the intermediate position without changing the information (α,β,γ) related to the intermediate posture of an intermediate point (qn, qn+1) obtained in the step of calculating one or more intermediate (qn, qn+1) points in the real space.

## Patentansprüche

1. Routenausgabeverfahren, welches eine Arithmetikeinrichtung (10) verwendet, die eine Ausgabeeinheit (11, 13, 60) und eine Arithmetikeinheit (15) enthält, wenn ein Roboter (20) mit einer Mehrzahl von beweglichen Wellen ein Objekt (W) von einer ersten Position (S) zu einer zweiten Position (G) transportiert, wobei die Arithmetikeinheit (15) die folgenden Schritte ausführt:
Berechnen der ersten Position (S) und der zweiten Position (G), die erste Bedingungen zum Einschränken der Haltung erfüllen, die das Objekt (W) im realen Raum einnehmen kann, wo sich das Objekt (W) befindet;
Berechnen eines oder mehrerer Zwischenpunkte (qn, qn+1) im realen Raum, die zusätzlich zu den ersten Bedingungen zweite Bedingungen erfüllen, die sich auf Roboterumgebungsinformationen beziehen, wobei der eine oder die mehreren Zwischenpunkte (qn, qn+1) die erste Position (S) und die zweite Position (G) verbinden;
Erzeugen einer Route (R) von der ersten Position (S) zu der zweiten Position (G) über den einen oder die mehreren Zwischenpunkte (qn, qn+1); und
Ausgeben der erzeugten Route (R) unter Verwendung der Ausgabeeinheit (11, 13, 60), wobei jeder Zwischenpunkt (qn, qn+1) Informationen enthält, die sich auf die Zwischenposition und eine Zwischenhaltung des Objekts (W) oder der Roboterhand auf der Route von der ersten Position (S) zur zweiten Position (G) beziehen, und
**dadurch gekennzeichnet, dass**
die Arithmetikeinheit (15) einen anderen Zwischenpunkt im realen Raum berechnet, der die ersten Bedingungen erfüllt, indem die Informationen (x, y, z), die sich auf die Zwischenposition beziehen, geändert werden, ohne die Informationen (α, β, γ) zu ändern, die sich auf die Zwischenhaltung eines Zwischenpunktes (qn, qn+l) beziehen, der in dem Schritt des Berechnens eines oder mehrerer Zwischenpunkte (qn, qn+1) im realen Raum erhalten wurde.

2. Routenausgabeverfahren nach Anspruch 1, wobei die Arithmetikeinheit (15) die erste Position (S) und die zweite Position (G) auf einer Route (R) zwischen der ersten Position (S) und der zweiten Position (G) berechnet, die die ersten Bedingungen in dem Schritt des Berechnens der ersten Position (S) und der zweiten Position (G) erfüllen.

3. Routenausgabeverfahren nach Anspruch 1, wobei Informationen, die sich auf die Zwischenposition an einem Zwischenpunkt (qn, qn+1) beziehen, geändert werden, so dass die Zwischenposition an einem anderen Zwischenpunkt (qn, qn+1) in Richtung der zweiten Position (G) in dem Schritt des Berechnens eines oder mehrerer Zwischenpunkte (qn, qn+1) im realen Raum fortschreitet.

4. Routenausgabeverfahren nach Anspruch 3, wobei die Arithmetikeinheit (15) die Informationen ändert, die sich auf die Zwischenposition an dem einen Zwischenpunkt (qn, qn+1) beziehen, so dass ein potentieller Wert einer Bewertungsfunktion abnimmt, wobei der potentielle Wert der Bewertungsfunktion zunimmt, wenn der Abstand von der ersten Position (S) kürzer wird, und wobei der potentielle Wert der Bewertungsfunktion abnimmt, wenn der Abstand zur zweiten Position (G) kürzer wird.

5. Routenausgabeverfahren nach Anspruch 3, wobei die Arithmetikeinheit (15) die Informationen ändert, die sich auf die Zwischenposition an dem einen Zwischenpunkt (qn, qn+1) beziehen, so dass die Zwischenposition an einem anderen Zwischenpunkt (qn, qn+1) entlang eines gerichteten Graphen (80) zu der zweiten Position (G) fortschreitet.

6. System, das eine Route ausgibt, wenn ein Roboter (20) mit einer Mehrzahl von beweglichen Wellen ein Objekt (W) von einer ersten Position (S) zu einer zweiten Position (G) transportiert, wobei das System umfasst:
eine Arithmetikeinheit (15); und
eine Ausgabeeinheit (11, 13, 60),
wobei die Arithmetikeinheit (15) ausgebildet ist, um:
die erste Position (S) und die zweite Position (G) zu berechnen, die erste Bedingungen zum Einschränken der Haltung erfüllen, die das Objekt (W) im realen Raum einnehmen kann, wo sich das Objekt (W) befindet;
einen oder mehrere Zwischenpunkte (qn, qn+1) im realen Raum zu berechnen, die zweite Bedingungen, die sich auf Roboterumgebungsinformationen beziehen, zusätzlich zu den ersten Bedingungen erfüllen, wobei der eine oder die mehreren Zwischenpunkte (qn, qn+1) die erste Position (S) und die zweite Position (G) verbinden; und
eine Route (R) von der ersten Position (S) zu der zweiten Position (G) über den einen oder die mehreren Zwischenpunkte (qn, qn+1) zu erzeugen, wobei die Ausgabeeinheit (11, 13, 60) eingerichtet ist, um die erzeugte Route (R) auszugeben, wobei jeder Zwischenpunkt (qn, qn+1) Informationen enthält, die sich auf die Zwischenposition und die Zwischenhaltung des Objekts (W) oder der Roboterhand auf der Route von der ersten Position (S) zur zweiten Position (G) beziehen, und
**dadurch gekennzeichnet, dass**
die Arithmetikeinheit (15) einen anderen Zwischenpunkt im realen Raum berechnet, der die ersten Bedingungen erfüllt, indem die Informationen (x, y, z), die sich auf die Zwischenposition beziehen, geändert werden, ohne die Informationen (α, β, γ) zu ändern, die sich auf die Zwischenhaltung eines Zwischenpunktes (qn, qn+1) beziehen, der in dem Schritt des Berechnens eines oder mehrerer Zwischenpunkte (qn, qn+1) im realen Raum erhalten wurde.

## Revendications

1. Procédé de délivrance d'itinéraire au moyen d'un dispositif arithmétique (10) comprenant une unité de sortie (11, 13, 60) et une unité arithmétique (15) lorsqu'un robot (20) comportant une pluralité d'arbres mobiles transporte un objet (W) d'une première position (S) à une seconde position (G), l'unité arithmétique (15) exécutant les étapes consistant à :
calculer la première position (S) et la seconde position (G) satisfaisant à des premières conditions pour limiter la posture que peut prendre l'objet (W) dans l'espace réel au niveau duquel est présent l'objet (W) ;
calculer un ou plusieurs points intermédiaires (qn, qn+1) dans l'espace réel satisfaisant à des secondes conditions associées à des informations d'environnement de robot en plus des premières conditions, le ou les points intermédiaires (qn, qn+1) reliant la première position (S) et la seconde position (G) ;
générer un itinéraire (R) de la première position (S) à la seconde position (G) par le biais du ou des points intermédiaires (qn, qn+1) ; et
délivrer l'itinéraire généré (R) au moyen de l'unité de sortie (11, 13, 60), dans lequel chaque point intermédiaire (qn, qn+1) comprend des informations associées à la position intermédiaire et à la posture intermédiaire de l'objet (W) ou de la main du robot sur l'itinéraire de la première position (S) à la seconde position (G), et
**caractérisé en ce que**
l'unité arithmétique (15) calcule un autre point intermédiaire dans l'espace réel satisfaisant aux premières conditions en modifiant les informations (x, y, z) associées à la position intermédiaire sans modifier les informations (α, β, γ) associées à la posture intermédiaire d'un point intermédiaire (qn, qn+1) obtenu à l'étape de calcul d'un ou de plusieurs points intermédiaires (qn, qn+1) dans l'espace réel.

2. Procédé de délivrance d'itinéraire selon la revendication 1, dans lequel l'unité arithmétique (15) calcule la première position (S) et la seconde position (G) sur un itinéraire (R) entre la première position (S) et la seconde position (G) satisfaisant aux premières conditions à l'étape de calcul de la première position (S) et de la seconde position (G).

3. Procédé de délivrance d'itinéraire selon la revendication 1, dans lequel des informations associées à la position intermédiaire au niveau d'un point intermédiaire (qn, qn+1) sont modifiées de sorte que la position intermédiaire au niveau d'un autre point intermédiaire (qn, qn+1) mène vers la seconde position (G) à l'étape de calcul d'un ou de plusieurs points intermédiaires (qn, qn+1) dans l'espace réel.

4. Procédé de délivrance d'itinéraire selon la revendication 3, dans lequel l'unité arithmétique (15) modifie les informations associées à la position intermédiaire au niveau dudit point intermédiaire (qn, qn+1) de sorte qu'une valeur potentielle d'une fonction d'évaluation diminue, dans lequel la valeur potentielle de la fonction d'évaluation augmente à mesure que diminue la distance par rapport à la première position (S), et la valeur potentielle de la fonction d'évaluation diminue à mesure que diminue la distance par rapport à la seconde position (G).

5. Procédé de délivrance d'itinéraire selon la revendication 3, dans lequel l'unité arithmétique (15) modifie les informations associées à la position intermédiaire au niveau dudit point intermédiaire (qn, qn+1) de sorte que la position intermédiaire au niveau d'un autre point intermédiaire (qn, qn+1) mène à la seconde position (G) le long d'un graphe orienté (80).

6. Système délivrant un itinéraire lorsqu'un robot (20) comportant une pluralité d'arbres mobiles transporte un objet (W) d'une première position (S) à une seconde position (G), le système comprenant :
une unité arithmétique (15) ; et
une unité de sortie (11, 13, 60),
l'unité arithmétique (15) étant configurée pour :
calculer la première position (S) et la seconde position (G) satisfaisant à des premières conditions pour limiter la posture que peut prendre l'objet (W) dans l'espace réel dans lequel est présent l'objet (W) ;
calculer un ou plusieurs points intermédiaires (qn, qn+1) dans l'espace réel satisfaisant à des secondes conditions associées à des informations d'environnement de robot en plus des premières conditions, le ou les points intermédiaires (qn, qn+1) reliant la première position (S) et la seconde position (G) ; et
générer un itinéraire (R) de la première position (S) à la seconde position (G) par le biais du ou des points intermédiaires (qn, qn+1),
l'unité de sortie (11, 13, 60) étant configurée pour délivrer l'itinéraire généré (R), dans lequel chaque point intermédiaire (qn, qn+1) comprend des informations associées à la position intermédiaire et à la posture intermédiaire de l'objet (W) ou de la main de robot sur l'itinéraire de la première position (S) à la seconde position (G), et
**caractérisé en ce que**
l'unité arithmétique (15) calcule un autre point intermédiaire dans l'espace réel satisfaisant aux premières conditions par une modification des informations (x, y, z) associées à la position intermédiaire sans modifier les informations (α, β, y) associées à la posture intermédiaire d'un point intermédiaire (qn, qn+1) obtenu à l'étape de calcul d'un ou de plusieurs points intermédiaires (qn, qn+1) dans l'espace réel.
